# EUROPÄISCHE PATENTANMELDUNG

(11) **EP 1 598 681 A2**
(43) Veröffentlichungstag der Anmeldung: **23.11.2005**
(21) Anmeldenummer: 05008873.1
(22) Anmeldetag: 22.04.2005
(51) Int. Cl.: G02B 1/11, G02B 1/10

(54) **Optische Komponente mit gekrümmter Oberfläche und Mehrlagenbeschichtung**

(30) Priorität: 17.05.2004 US 571502 P
(71) Anmelder: Carl Zeiss SMT AG, 73447 Oberkochen (DE)
(72) Erfinder: Scheible, Patrick, Dr., verstorben (DE); Schink, Harald, 73430 Aalen (DE); Hirnet, Alexander, Dr., 73447 Oberkochen (DE); Scheible Günther, 70186 Stuttgart (DE); Scheible, Sigrid, 70186 Stuttgart (DE)
(74) Vertreter: Muschik, Thomas

(57) **Zusammenfassung**

Eine optische Komponente hat ein Substrat, an dem mindestens eine gekrümmte Substratoberfläche ausgebildet ist, die eine optische Achse der optischen Komponente definiert, wobei die Substratoberfläche mit einer im Ultraviolettbereich bei einer Designwellenlänge λ₀ wirksamen Mehrlagenbeschichtung belegt ist, die eine auf der Substratoberfläche aufgebrachte erste Schicht aus einem ersten dielektrischen Material und mindestens eine auf der ersten Schicht aufgebrachte zweite Schicht aus einem zweiten dielektrischen Material umfasst, wobei das Substrat aus einem Kristallmaterial besteht, das eine parallel zur optischen Achse verlaufende achsparallele Kristallrichtung und senkrecht auf Randbereichen der gekrümmten Substratoberfläche stehende Rand-Kristallrichtungen aufweist, wobei ein Winkel zwischen der achsparallelen Kristallrichtung und den Rand-Kristallrichtungen mindestens 17° beträgt und die erste Schicht eine im Wesentlichen texturfreie Schichtstruktur hat. Eine durch die Substratstruktur bedingte Anisotropie der optischen Eigenschaften der Mehrlagenbeschichtung kann dadurch vermieden werden.

## Beschreibung

### HINTERGRUND DER ERFINDUNG

### Gebiet der Erfindung

Die Erfindung bezieht sich auf eine optische Komponente mit einem Substrat, an dem mindestens eine gekrümmte Substratoberfläche ausgebildet ist, die eine optische Achse der optischen Komponente definiert, wobei die Substratoberfläche mit einer im Ultraviolettlichtbereich bei einer Designwellenlänge λ₀ wirksamen Mehrlagenbeschichtung belegt ist, die eine auf der Substratoberfläche aufgebrachte erste Schicht aus einem ersten dielektrischen Material und mindestens eine auf der ersten Schicht aufgebrachte zweite Schicht aus einem zweiten dielektrischen Material umfasst. Die Erfindung bezieht sich auch auf ein optisches Abbildungssystem mit mindestens einer solchen Komponente und auf ein Verfahren zur Herstellung optischer Komponenten.

### Beschreibung des verwandten Standes der Technik

In vielen Bereichen der Anwendung optischer Systeme steigt der Bedarf nach leistungsfähigen optischen Komponenten, deren optische Eigenschaften für Designwellenlängen λ₀ optimiert sind, die im tiefen Ultraviolettbereich (DUV) oder im Vakuumultraviolettbereich (VUV) liegen, insbesondere im Wellenlängenbereich zwischen ca. 120 nm und ca. 260 nm. Strahlung aus diesem Wellenlängenbereich wird beispielsweise bei Mikrolithografiesystemen zur Herstellung von hochintegrierten Halbleiterbauelementen oder anderen feinstrukturierten Komponenten mit Hilfe von Wafersteppern oder Waferscannern verwendet. Dabei beleuchtet eine Lichtquelle, beispielsweise ein Laser, über ein Beleuchtungssystem eine Maske (Retikel), deren Bild mit Hilfe eines Projektionssystems auf einen mit einer Fotoresistschicht beschichteten Halbleiterwafer abgebildet wird.

Da die Wirtschaftlichkeit dieses Verfahrens entscheidend von der Schnelligkeit eines Belichtungsvorgangs bestimmt wird, werden Optiken mit möglichst geringen Lichtverlusten zwischen Lichtquelle und Wafer benötigt. Daher werden die der Strahlung ausgesetzten Oberflächen transparenter optischer Komponenten der Systeme zur Erhöhung ihrer Lichtdurchlässigkeit bzw. Transmission mit sogenannten Antireflexschichten (AR-Schicht) bzw. Reflexionsminderungsschichten beschichtet. Diese Entspiegelungsbeschichtungen führen zu einer Transmissionserhöhung, solange die Lichtverluste, die beispielsweise durch Absorption und Streuung durch die Beschichtung eingeführt werden, klein gegenüber der Größenordnung der Reflexionserniedrigung bleiben. Die Reflexionsminderung dient auch der Vermeidung von Falschlicht oder Streulicht, durch das die Abbildungseigenschaften hochwertiger Abbildungssysteme beeinträchtigt werden können.

Um immer feinere Strukturen erzeugen zu können, wird einerseits versucht, die bildseitige numerische Apertur (NA) der Projektionsobjektive und der daran angepassten Beleuchtungssysteme immer weiter zu vergrößern. Andererseits werden immer kürzere Wellenlängen verwendet, beispielsweise 248 nm, 193 nm und 157 nm. Da in diesem Wellenlängenbereich nur noch wenige ausreichend transparente Materialien zur Herstellung der optischen Komponenten zur Verfügung stehen, deren Abbekonstanten zudem relativ nahe beieinander liegen, ist es schwierig, rein refraktive Systeme mit ausreichender Korrektur von Farbfehlern bereitzustellen. Daher werden für diesen Wellenlängenbereich vielfach katadioptrische Systeme verwendet, bei denen brechende und reflektierende Komponenten, insbesondere Linsen und Spiegel mit gekrümmter Spiegelfläche, kombiniert sind. Die gekrümmte Substratoberfläche eines Konkavspiegels kann mit einer dielektrischen Mehrlagenbeschichtung belegt sein, die der Optimierung des Reflexionsgrades dient und als Reflexbeschichtung oder hochreflektierende Beschichtung (HR-Schicht) bezeichnet wird. Die Verwendung von konkaven Rückflächenspiegeln (Mangin-Spiegel) in Katadioptriksystemen ist ebenfalls bekannt.

Zu den auch bei Wellenlängen unterhalb von 193 nm ausreichend transparenten optischen Materialien zählen vor allem fluoridische Kristallmaterialien wie einkristallines Kalziumfluorid (CaF₂) oder Bariumfluorid (BaF₂).

Bei den genannten kurzen Wellenlängen ist auch die Auswahl verfügbarer dielektrischer Materialien zum Aufbau von dielektrischen Mehrlagenbeschichtungen mit abwechselnd hochbrechenden und niedrigbrechenden Einzelschichten begrenzt. Bei Wellenlängen von 193 nm oder darunter sind fluoridische Materialien aufgrund ihrer hohen Transparenz bzw. eines geringen materialspezifischen Absorptionsgrades bevorzugt. Dabei werden häufig Lanthanfluorid (LaF₃) als hochbrechendes und Magnesiumfluorid (MgF₂) als niedrigbrechendes dielektrisches Material verwendet.

In dem Artikel "Hetero-epitaxial growth and optical properties of LaF₃ and CaF₂" von Y. Taki und K. Muramatsu in: Thin Solid Films 420 - 421 (2002) Seiten 30 bis 37 werden Studien zum Aufwachsverhalten von Lanthanfluoridschichten auf Kalziumfluorid-Substraten und Substraten aus synthetischem Quarzglas vorgestellt. Die Autoren weisen nach, dass Lanthanfluoridschichten, die bei Temperaturen von 250°C durch Vakuumverdampfen auf Kalziumfluoridsubstrate aufgebracht wurden, deren Oberfläche parallel zu (111)-Netzebenen des kristallinen Substratmaterials verlaufen, in geordneter Form epitaxial aufwachsen. Wenn das Lanthanfluorid bei gleichen Aufdampfbedingungen auf ein Substrat aus synthetischem Quarzglas abgeschieden wurde, hatte die Lanthanfluoridschicht eine polykristalline Struktur mit statistischer Kristallitorientierung. Die Autoren weisen darauf hin, dass eine mangelhafte Kristallinität und eine poröse Struktur von Lanthanfluoridschichten deren optische Transparenz im Vakuumultraviolettbereich (VUV) beeinträchtigen, während das Epitaxialwachstum von Lanthanfluorid auf <111>-orientiertem Kalziumfluorid die Fotoabsorption in der Lanthanfluoridschicht sehr effektiv vermindert.

In der WO 03/009015 werden optische Komponenten mit Kalziumfluorid-Substraten vorgestellt, deren Oberflächen parallel oder im Winkel von maximal 30° zu einer (111)-Ebene des Kristallmaterials liegen. Diese Substratoberflächen sind mit einer epitaktisch aufgewachsenen Schicht aus Lanthanfluorid belegt, die eine dichte, defektarme Struktur, einen hohen Brechungsindex und geringe Absorptionsverluste haben soll.

In dem Patent US 5,963,365 werden verschiedene Dreilagen-Antireflexbeschichtungen vorgestellt, die für Designwellenlängen im Bereich zwischen 150 nm und 300 nm eine starke reflexionsmindernde Wirkung haben sollen. Dabei wird vorgeschlagen, die erste, substratnächste Schicht aus einem niedrigbrechenden Material, z.B. MgF₂ oder Na₃AlF₆, mit dünnen optischen Schichtdicken zwischen 0,05 λ₀ und 0,15 λ₀ auszulegen, während die daraufliegenden hochbrechenden und niedrigbrechenden Schichten als Viertelwellenlängenschichten (optische Schichtdicke ca. 0,25 λ₀) ausgebildet sind, wobei jeweils LaF₃ als hochbrechendes Material verwendet wird. Diese Mehrlagenbeschichtungen sollen auf ebenen oder schwach gekrümmten Substraten aus synthetischem Quarzglas bis zu großen Inzidenzwinkeln der auftreffenden Strahlung von mehr als 40° gute Reflexionsminderungswirkung haben.

In dem Patent US 6,261,696 B1 wird ein Beschichtungsverfahren beschreiben, mit dem es bei Verwendung von fluoridhaltigen Substratmaterialien möglich sein soll, bei einer Beschichtungserzeugung mit Hilfe von Sputtertechnik die Bildung von Farbzentren zu vermeiden. Dazu wird auf die Substratoberfläche als erste Schicht eine Schicht aus Siliziumoxid, Berylliumoxid, Magnesiumoxid oder Magnesiumfluorid mit einer Schichtdicke von 30 nm oder weniger aufgebracht. Die Schutzschicht soll ein Eindringen des Plasmas in das Substratmaterial und eine dadurch bewirkte Erzeugung von Farbzentren verhindern.

Insbesondere bei Anwendungen im Bereich der Mikrolithografie bei hohen numerische Aperturen können optische Komponenten aus fluoridischem Kristallmaterial mit stark gekrümmten Oberflächen auftreten. Es hat sich bei Untersuchungen der Erfinder gezeigt, dass bei solchen Systemen gelegentlich unerwünschte Variationen der Transmission über den Querschnitt des optischen Systems auftraten, deren Ursachen ungeklärt waren.

### ZUSAMMENFASSUNG DER ERFINDUNG

Es ist eine Aufgabe der Erfindung, eine optische Komponente aus Kristallmaterial mit mindestens einer mit einer dielektrischen Mehrlagenbeschichtung belegten, gekrümmten Substratoberfläche bereitzustellen, die sich durch hohe Gleichmäßigkeit der optischen Wirkung über die gesamte Substratoberfläche auszeichnet. Es ist eine weitere Aufgabe der Erfindung, ein optisches Abbildungssystem bereitzustellen, das insbesondere in Projektionsbelichtungsanlagen für die Mikrolithografie verwendbar ist und sich durch eine hohe und über den Systemquerschnitt gleichmäßige Gesamttransmission auszeichnet.

Diese und andere Aufgaben werden gemäß einem Aspekt der Erfindung durch eine optische Komponente gelöst, die ein Substrat hat, an dem mindestens eine gekrümmte Substratoberfläche ausgebildet ist, die eine optische Achse der optischen Komponente definiert, wobei die Substratoberfläche mit einer im Ultraviolettbereich bei einer Designwellenlänge λ₀ wirksamen Mehrlagenbeschichtung belegt ist, die eine auf der Substratoberfläche aufgebrachte erste Schicht aus einem ersten dielektrischen Material und mindestens eine auf der ersten Schicht aufgebrachte zweite Schicht aus einem zweiten dielektrischen Material umfasst, wobei das Substrat aus einem Kristallmaterial besteht, das eine parallel zur optischen Achse verlaufende achsparallele Kristallrichtung und senkrecht auf Randzonen der gekrümmten Substratoberfläche stehende Rand-Kristallrichtungen aufweist, wobei ein Winkel zwischen der achsparallelen Kristallrichtung und den Rand-Kristallrichtungen mindestens 17° beträgt und die erste Schicht eine im Wesentlichen texturfreie Schichtstruktur hat.

Die Erfinder haben erkannt, dass stark gekrümmte Substratoberflächen von Kalziumfluoridlinsen oder anderen mit einem Substrat aus einkristallinem Kristallmaterial aufgebauten optischen Komponenten für die beim Beschichtungsprozess aufwachsende erste Schicht unter gewissen Bedingungen eine anisotrope Oberfläche darstellen können, die eine entsprechende Anisotropie der optischen Eigenschaften der Mehrlagenbeschichtung verursacht, sofern die erste Schicht weitgehend epitaktisch aufwächst und damit die Anisotropie der Substratoberfläche in die Eigenschaften der Mehrlagenbeschichtung fortsetzt. Wird dagegen durch geeignete Wahl des Beschichtungsmaterials für die erste Schicht und/oder durch geeignete Beschichtungsparameter beim Beschichtungsprozess sichergestellt, dass die dem Substrat nächste erste Schicht im Wesentlichen texturfrei ist und damit über die Substratoberfläche hinweg lokal und global keine ausgeprägten Vorzugsrichtungen aufweist, so kann die Epitaxie unterdrückt werden, so dass die Anisotropie der Substratoberfläche sich nicht auf die optischen Eigenschaften der aufwachsenden Mehrlagenbeschichtung auswirken kann. Auf diese Weise ist es mit Hilfe einer geeigneten Pufferschicht, die die Kristallstruktur des Substrates nicht fortsetzt, möglich, Mehrlagenbeschichtungen mit über die gesamte Substratoberfläche weitgehend gleichmäßigen oder nur geringfügig variierenden optischen Eigenschaften bereitzustellen.

Die beobachtete Anisotropie der Substratoberfläche tritt vor allem dann in substantiellem Ausmaße auf, wenn aufgrund der Krümmung und/oder des Durchmessers der Substratoberfläche in verschiedenen Oberflächenbereichen der Substratoberfläche unterschiedliche, niedrig indizierte Netzebenen des Kristallmaterials mehr oder weniger parallel zum lokalen Verlauf der Substratoberfläche verlaufen. Besonders in denjenigen Oberflächenbereichen, in denen lokale Substratoberflächenbereiche im Wesentlichen parallel zu niedrig indizierten Netzebenen bzw. senkrecht zu niedrig indizierten Kristallrichtungen des Kristallmaterials verlaufen, unterscheiden sich die Wachstumsbedingungen der ersten Schicht deutlich von angrenzenden Oberflächenbereichen der Substratoberfläche, wo hoch indizierte Ebenen an die Substratoberfläche stoßen. Diese Unterschiede bewirken in der Regel eine Anisotropie der Aufwachsbedingungen. Dementsprechend wird die Anisotropie dann besonders ausgeprägt, wenn die gekrümmte Substratoberfläche so verläuft, dass an mindestens zwei unterschiedlichen Oberflächenbereichen der Substratoberfläche niedrig indizierte Kristallrichtungen des Kristallmaterials senkrecht zur Substratoberfläche stehen.

Bei kubischen Kristallen beträgt der Winkel zwischen einer <100>-Richtung und einer benachbarten <110>-Richtung 45°, der Winkel zwischen einer <100>-Richtung und einer benachbarten <111 >-Richtung 54,7° und der Winkel zwischen einer <111>-Richtung und einer benachbarten <110>-Richtung 35,3°. Daher wird beispielsweise bei einem Substrat, dessen achsparallele Kristallrichtung eine <111 >-Richtung ist, in der Randzone an drei in Umfangsrichtung (Azimutalrichtung) versetzten Orten eine Oberflächenorientierung im Wesentlichen senkrecht zu einer <110>-Richtung auftreten, wenn die Substratoberfläche so stark gekrümmt ist und/oder einen derart großen Durchmesser hat, dass die Krümmung ausreicht, damit ein Winkel zwischen der achsparallelen Kristallrichtung und den Rand-Kristallrichtungen mindestens 35,3° beträgt.

Bei bevorzugten Ausführungsformen liegt die achsparallele Kristallrichtung in der Nähe einer niedrig indizierten Kristallrichtung des Kristallmaterials. Sie kann beispielsweise weniger als 15° oder weniger als 10° von einer <111>-, <110>- oder <100>-Richtung des Kristallmaterials abweichen. Insbesondere solche Komponenten, bei denen der Abweichungswinkel weniger als 5° oder weniger als 2° oder weniger als 1° von einer dieser niedrig indizierten Kristallrichtungen beträgt, sind in Hochleistungsoptiken für die Mikrolithografie und bei anderen UV-Hochleistungsoptiken üblich und können durch die Erfindung besser als bisher nutzbar gemacht werden.

Bei einer Ausführungsform besteht die erste Schicht aus einem niedrigbrechenden Material, insbesondere im Wesentlichen aus Magnesiumfluorid. Es hat sich herausgestellt, dass dieses Material so aufgebracht werden kann, dass eine im Wesentlichen ungeordnete Unterlage für die daraufliegende zweite Schicht und gegebenenfalls für folgende Schichten geschaffen werden kann, so dass ein epitaktisches Wachstum der Beschichtung unterdrückt werden kann. Alternativ können andere niedrigbrechende dielektrische Materialien, beispielsweise Aluminiumfluorid, Litiumfluorid, Chiolit (Na₅Al₃F₁₄) oder Cryolit (Na₃AlF₆) oder Siliziumdioxid (SiO₂) für die erste Schicht verwendet werden.

Der Beschichtungsprozess kann so gesteuert werden, dass die erste Schicht mindestens bereichsweise amorph aufwächst, also zumindest lokal keine definierte Kristallstruktur aufweist. Hierfür hat es sich als vorteilhaft herausgestellt, wenn die Prozesstemperatur beim Beschichtungsprozess auf sehr niedrige Temperaturen eingestellt wird, insbesondere auf Temperaturen von 180°C oder darunter. Dadurch kann die Oberflächendiffusion der auftreffenden Schichtteilchen am Substrat reduziert werden, so dass die Möglichkeit der Reorganisation gehemmt und die oben beschriebenen, durch Heteroepitaxie verursachten Effekte verringert oder vermieden werden können. Insbesondere bei solch niedrigen Beschichtungstemperaturen kann alternativ zu einer ersten Schicht aus Magnesiumfluorid auch eine weitgehend ungeordnete erste Schicht aus Kalziumfluorid aufgebracht werden. Diese amorphe CaF₂-Schicht hat einen niedrigen Brechungsindex als kristallines CaF₂, ist also in Bezug auf ein solches Substrat geringfügig niedrigbrechend.

Der Beschichtungsprozess kann auch so durchgeführt werden, dass die erste Schicht eine polykristalline Schicht mit einer Vielzahl von Kristalliten mit im Wesentlichen statistischer Verteilung von Kristallorientierungen ist. Durch die polykristalline erste Schicht kann die nachteilige Anisotropie der Hetero-Beschichtungseigenschaften ebenfalls unterdrückt werden.

Sofern es für ein Schichtdesign gewünscht ist, als erste Schicht ein hochbrechendes dielektrisches Material zu haben, dessen Brechungsindex z.B. demjenigen von Lanthanfluorid zumindest ähnlich ist, so ist bei manchen Ausführungsformen vorgesehen, zunächst auf die Substratoberfläche ein anderes hochbrechendes Material, beispielsweise Gadoliniumfluorid in geeigneter Dicke aufzubringen, bevor Lanthanfluorid als weiteres Schichtmaterial aufgebracht wird. Beide Schichten können dann zusammen als eine hochbrechende Schicht mit inhomogener Brechzahl dienen, die jedoch im Unterschied zu einer reinen Schicht aus Lanthanfluorid den Vorteil eines ungeordneten Schichtaufbaus hat. Alternativ zu Gadoliniumfluorid können z.B. Aluminiumoxid (Al₂O₃), Erbiumfluorid (ErF₃), Holmiumfluorid (HoF₃), Neodymfluorid (NdF₂), Samariumfluorid (SmF₃), Terbiumfluorid (TbF₃), Titanfluorid (TiF₃), Yttriumfluorid (YF₃), Ytterbiumfluorid (YbF₃) oder Mischungen daraus verwendet werden.

Die optische Komponente ist bei bevorzugten Ausführungsformen eine Linse mit einem Substrat aus einem für die Strahlung der Designwellenlänge transparenten Kristallmaterial, wobei die Mehrlagenbeschichtung als Mehrlagen-Antireflexbeschichtung ausgelegt ist. Dabei ist es möglich, eine mit einer Mehrlagen-Antireflexbeschichtung beschichtete optische Komponente mit einem ortsabhängigen Transmissionsgrad zu erhalten, der über den Querschnitt der Substratoberfläche eine Variationsbreite von weniger als 1 Prozentpunkt aufweist.

Insbesondere bei Linsen, deren optische Achse im Wesentlichen parallel zu einer niedrig indizierten Kristallrichtung liegt, wurde bei herkömmlichen Beschichtungen auf stark gekrümmten Substratoberflächen eine mehrzählige Radialsymmetrie des Transmissionsgrades in Umfangsrichtung (Azimutalrichtung) der Linsen im Bereich der Randzone beobachtet. Diese wird beispielsweise bei <111>-orientierten Linsen entsprechend der dreizähligen Symmetrie der <111>-Richtung auch als "3-Welligkeit" bezeichnet, und tritt beispielsweise bei <100>- orientierten Linsen in entsprechender Weise als 4-Welligkeit oder bei <110>-orientierten Linsen als 2-Welligkeit auf. Durch die Erfindung ist es bei bevorzugten Ausführungsformen möglich, diesen Effekt zu unterdrücken, so dass der Transmissionsgrad im Bereich der Randzone in Umfangsrichtung bei bevorzugten Ausführungsformen eine Variationsbreite (Modulationshöhe) hat, die weniger als 1 Prozentpunkt beträgt.

Die Erfindung ist auch bei der Herstellung von hochreflektierenden Spiegeln nutzbar, bei denen auf ein Spiegelsubtrat aus einem Kristallmaterial mit gekrümmter Substratoberfläche eine hochreflektierende dielektrische Mehrlagenreflexbeschichtung aufgebracht ist. Hier kommen insbesondere Konkavspiegel in Betracht, die als Rückflächenspiegel ausgelegt sind. Solche Mangin-Spiegel können z.B. in Katadioptriksystemen zur Farbkorrektur und zur Korrektur der Bildfeldwölbung eingesetzt werden. Das transparente Spiegelsubtrat kann dabei die Form einer Negativ-Meniskuslinse haben.

Die Erfindung betrifft auch ein optisches Abbildungssystem zur Abbildung einer ersten Feldfläche in eine optisch konjugierte zweite Feldfläche mit mehreren optischen Komponenten, wobei mindestens eine der optischen Komponenten gemäß der Erfindung aufgebaut ist. Häufig befinden sich in solchen Abbildungssystemen Linsen mit zumindest einer stark gekrümmten Substratoberfläche in der Nähe einer Feldfläche dort, wo die Randstrahlhöhe der Abbildung klein gegen die Hauptstrahlhöhe ist. Dieser Bereich wird hier auch als feldnaher Bereich bezeichnet. Dabei kann die optische Komponente mit der gemäß der Erfindung beschichteten, gekrümmten Substratoberfläche so angeordnet sein, dass an dieser Oberfläche Inzidenzwinkel der einfallenden Strahlung auftreten, die Inzidenzwinkel von mehr als 30° einschließen. In der DE 101 48 308 (entsprechend US 2002/0163737) sind als Beispiel Beleuchtungssysteme gezeigt, die ein als Rema-Objektiv bezeichnetes Abbildungssystem umfassen, mit dem die Austrittsfläche eines vorgeschalteten Stabintegrators in die Austrittsebene des Beleuchtungssystems auf ein dort befindliches Retikel abgebildet wird. Am Eintritt des Rema-Objektivs ist eine zum Eintritt konkave Meniskuslinse vorgesehen, bei der sowohl die Eintrittsfläche als auch die Austrittsfläche stark gekrümmt sind. Projektionsobjektive für die Mikrolithografie haben häufig als letzte Linse vor der Bildebene eine Plankonvexlinse, deren Eintrittsfläche stark gekrümmt sein kann. Die Erfindung ist somit im Bereich der Mikrolithografie sowohl in Beleuchtungssystemen als auch bei Projektionsobjektiven vorteilhaft nutzbar.

Die vorstehenden und weitere Merkmale gehen außer aus den Ansprüchen auch aus der Beschreibung und aus den Zeichnungen hervor, wobei die einzelnen Merkmale jeweils für sich alleine oder zu mehreren in Form von Unterkombinationen bei einer Ausführungsform der Erfindung und auf anderen Gebieten verwirklicht sein und vorteilhafte sowie für sich schutzfähige Ausführungsformen darstellen können.

### KURZE BESCHREIBUNG DER ZEICHUNGSFIGUREN

- Fig. 1: zeigt eine schematische Darstellung einer bikonvexen Positivlinse aus <111>-orientiertem Kalziumfluorid mit stark gekrümmten Linsenflächen;
- Fig. 2: zeigt eine Detailansicht einer Drei-Schichten-Antireflexbeschichtung gemäß einer Ausführungsform der Erfindung;
- Fig. 3: zeigt ein Diagramm, in dem die Transmission einer Linse als Funktion des Azimutwinkels für einen Randbereich (RS) und einen zwischen optischer Achse und Randbereich liegenden Zonenbereich (Z) bei einer herkömmlich beschichteten Referenzlinse gezeigt ist;
- Fig. 4: zeigt ein Diagramm, in dem der Reflexionsgrad der herkömmlich beschichteten Referenzlinse im Randbereich (RS) als Funktion des Azimutwinkels gezeigt ist;
- Fig. 5: zeigt ein Diagramm, in dem die spektrale Lage von Reflexionsminima an verschiedenen geometrisch äquivalenten Orten des Randbereiches einer herkömmlich beschichteten Referenzlinse gezeigt ist;
- Fig. 6: zeigt ein Diagramm, in dem der Einfluss der Beschichtungstemperatur auf den Reflexionsgrad im Randbereich einer gekrümmten Substratoberfläche gezeigt ist;
- Fig. 7: zeigt ein Diagramm, in dem der Transmissionsgrad einer beidseitig beschichteten Linse mit gekrümmten Substratoberflächen als Funktion des Azimutwinkels für den Randbereich und den Zonenbereich einer gemäß einer Ausführungsform der Erfindung beschichteten Linse gezeigt ist;
- Fig. 8: zeigt ein Diagramm, in dem die spektrale Lage von Reflexionsminima an einer gemäß einer Ausführungsform der Erfindung beschichteten Linse für einen Mittenbereich und einen Randbereich gezeigt ist; und
- Fig. 9: zeigt eine Ausführungsform einer Projektionsbelichtungsanlage für die Mikrolithografie mit optischen Komponenten gemäß der Erfindung.

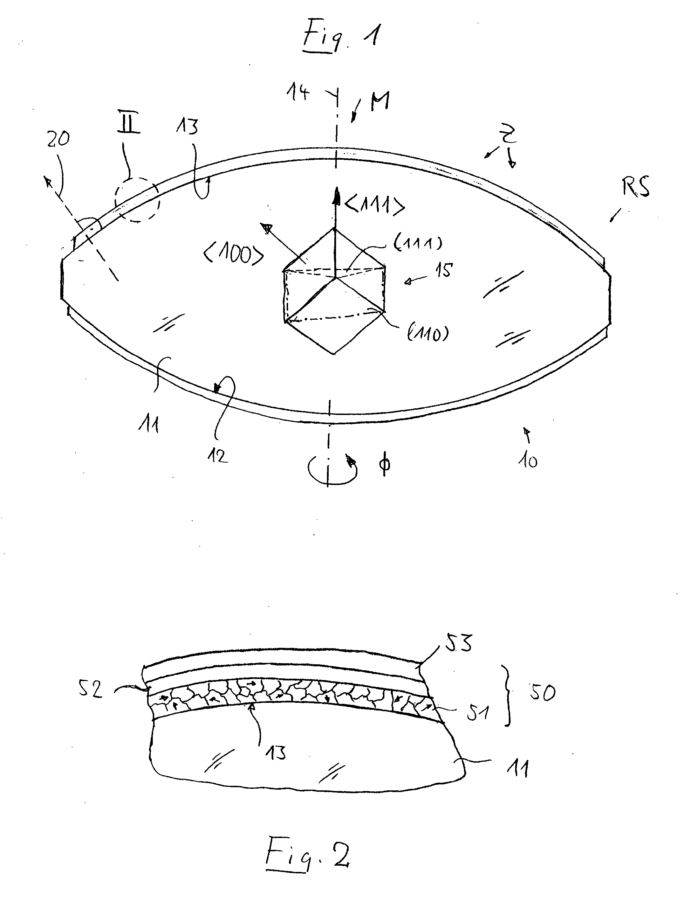

Die schematische Darstellung in Fig. 1 zeigt ein Ausführungsbeispiel einer erfindungsgemäßen optischen Komponente, die als bikonvexe Positivlinse 10 mit beidseitig stark gekrümmten Linsenoberflächen gestaltet ist. Die Linse hat ein Substrat 11 aus einkristallinem Kalziumfluorid (CaF₂), an dem zwei stark konvex gekrümmte, sphärische Substratoberflächen 12, 13 ausgebildet sind. Die Krümmungsmittelpunkte der Substratoberflächen definieren die optische Achse 14 der Linse 10. Der Rohkörper für die Linse (Linsenblank) ist aus einem kreiszylindrischen Kalziumfluorid-Einkristall geschnitten, dessen durch die Wachstumsrichtung vorgegebene Längsachse im Wesentlichen parallel zu einer <111>-Richtung des Kristallmaterials verläuft. Solche Linsen, die im Folgenden auch als "<111>-orientierte Linsen" bezeichnet werden, werden häufig in Beleuchtungssystemen oder Projektionsobjektiven für Mikrolithografie-Projektionsanlagen verwendet, die mit Strahlung aus dem tiefen Ultraviolettbereich (DUV) oder Vakuumultraviolettbereich (VUV) arbeiten. Sie werden beispielsweise bei Systemen mit 193 nm Arbeitswellenlänge in Kombination mit Linsen aus synthetischem Quarzglas zur Farbkorrektur verwendet. Aufgrund der im Vergleich zu synthetischem Quarzglas geringeren Neigung von Kalziumfluorid zu strahlungsinduzierter Dichteänderung (insbesondere Compaction) werden Kalziumfluorid-Linsen auch in Bereichen hoher Strahlungsenergiedichte verwendet, die bei optischen Abbildungssystemen häufig in der Nähe von Feldebenen der Abbildung liegen (Objektfläche, Bildfläche, Bereich eines reellen Zwischenbildes).

Die kristallografische Orientierung des Kristallmaterials bedingt, dass die Substratoberflächen 12, 13 im Mittenbereich M der Linse, d.h. in der Nähe der optischen Achse 14, im Wesentlichen parallel zu (111)-Netzebenen des Kristallmaterials verlaufen. Eine solche Netzebene ist innerhalb des schematisch dargestellten Einheitswürfels 15 des Kristallmaterials schematisch gestrichelt gezeigt. Bedingt durch die starke Krümmung der Substratoberflächen, die einen Krümmungsradius R haben, der in der Größenordnung des Durchmessers D der Linse liegen kann, weicht die Orientierung der gekrümmten Substratoberfläche im Randbereich RS der Substratoberfläche stark von einer <111>-Orientierung ab. Im Beispielsfall steht eine senkrecht auf dem Randbereich der gekrümmten Substratoberfläche stehende Rand-Kristallrichtung 20 in einem Winkel von deutlich mehr als 30° zur achsparallelen <111>-Kristallrichtung.

Aufgrund der starken Krümmung der Substratoberfläche ist diese in kristallografischer Hinsichtlich stark anisotrop, da an unterschiedlichen Stellen der Substratoberfläche unterschiedliche hoch- und niedrigindizierte Netzebenen des Kristallmaterials die Substratoberfläche bilden. Für die gezeigte <111>-Orientierung ergibt sich dabei bezogen auf die optische Achse 14 eine dreizählige Radialsymmetrie. Ist beispielsweise die Substratoberfläche so stark gekrümmt, dass zwischen der achsparallelen <111>-Richtung und der Flächennormalenrichtung 20 im Randbereich der Substratoberfläche ein Winkel von ca. 35° oder mehr liegt, so tauchen in der Randzone an drei geometrisch zueinander äquivalenten Positionen (110)-Netzebenen als oberflächenparallele Ebenen auf, wobei die Durchstoßpunkte von <110>-Richtungen jeweils um einen Azimutwinkel Φ = 120° zueinander versetzt liegen. Eine senkrecht auf einer <110>-Richtung stehende (110)-Ebene ist im Einheitswürfel 15 strichpunktiert dargestellt.

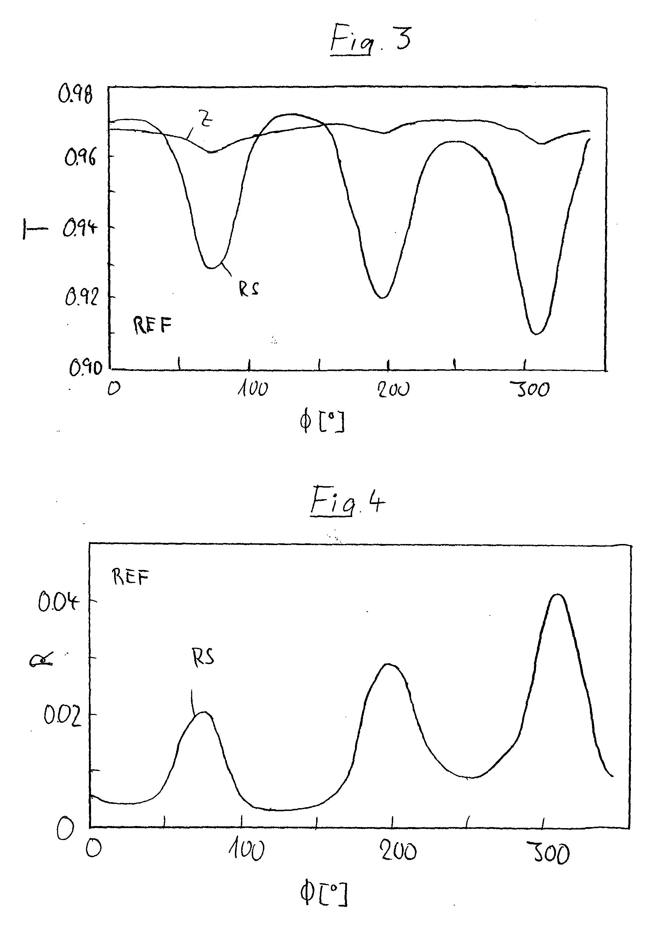

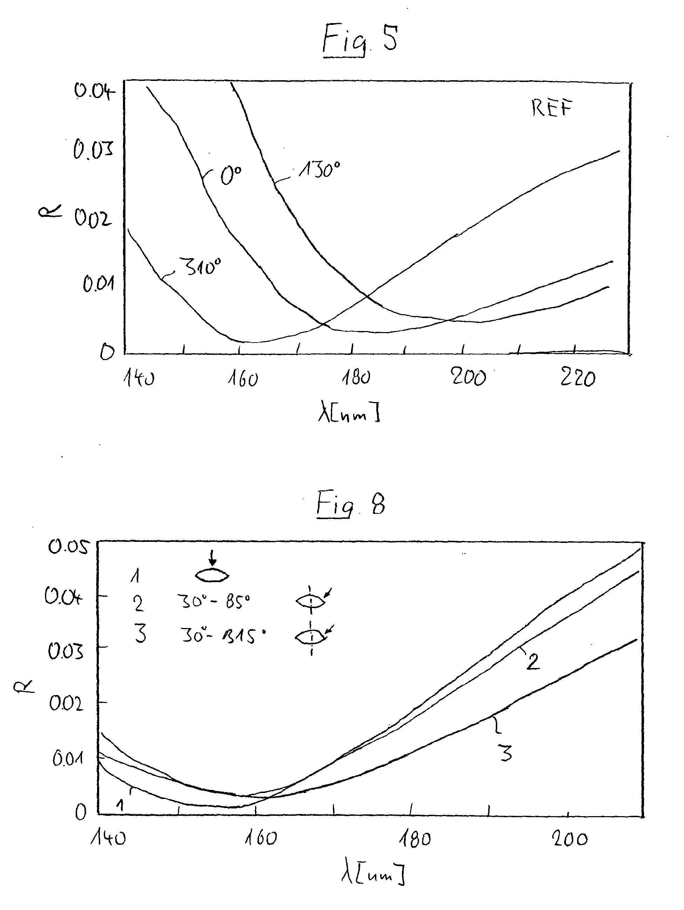

Zur Erläuterung der Probleme, die sich bei der Beschichtung von einkristallinen Substraten mit stark gekrümmten Substratoberflächen ergeben können, werden zunächst anhand der Figuren 3 bis 5 einige optische Eigenschaften einer herkömmlich beschichteten Referenzlinse (REF) erläutert, die ein <111>-orientiertes Kalziumfluorid-Substrat und stark gekrümmte Oberflächen (Winkel zwischen achsparalleler Kristallrichtung und Rand-Kristallrichtung > 30°) hatte. Beide Substratoberflächen waren mit einer 2-Lagen-Antireflexbeschichtung beschichtet, bei der die direkt auf der Substratoberfläche aufliegende erste Schicht aus Lanthanfluorid (LaF₃) und die darüber liegende zweite Schicht aus Magnesiumfluorid (MgF₂) bestand. Die Schichten des 2-Schichters wurden in herkömmlicher Weise bei einer Beschichtungstemperatur von ca. T > 200°C durch Elektronenstrahlverdampfung aufgebracht. Die optischen Schichtdicken (n - d) beider Schichten betrugen jeweils (0,25) λ₀, wobei λ₀ die Designwellenlänge der Beschichtung (hier 157 nm), n der Brechungsindex des Schichtmaterials und d die geometrische Schichtdicke des Schichtmaterials ist.

Anschließend an die Beschichtung wurden die optischen Eigenschaften bei Rundlaufmessungen bestimmt. Bei den Rundlaufmessungen wird die Linse um ihre optische Achse gedreht und die optischen Eigenschaften werden jeweils bei konstanter Höhe (radialer Abstand zur optischen Achse) bei Variation des Azimutwinkels Φ gemessen. Messungen wurden sowohl im Randbereich RS der beschichteten Substratoberfläche als auch im Zonenbereich Z (zwischen optischer Achse und Randbereich) und im Mittelbereich M nahe der optischen Achse durchgeführt. Als "Randbereich" wird hier ein ringförmiger Bereich am äußeren Rand der Beschichtung bezeichnet, dessen Breite in Radialrichtung maximal 20% des Radius der Beschichtung beträgt.

Bei diesen Rundlaufmessungen wurde im Randbereich RS eine starke Modulation des Reflexionsgrades R und des Transmissionsgrades T mit dem Azimutwinkel Φ beobachtet. Durch spektrale Messungen des Reflexionsgrades an unterschiedlichen Umfangspositionen (gegeben durch Azimutwinkel Φ) konnte gezeigt werden, dass die Hauptursache der starken Modulation in einer stark unterschiedlichen spektralen Lage des Reflexionsminimums der Antireflexbeschichtung liegt.

Die Figuren 3 bis 5 dokumentieren diese Ergebnisse. In Fig. 3 ist das Ergebnis einer Rundlauf-Transmissionsmessung einer beidseitig auf herkömmliche Weise (2-Schichter, T > 200°C) beschichteten Linse dargestellt. Im Bereich der Zone (Kurve Z) ist eine geringfügige Modulation der Transmission T (Modulationshöhe ca. 1 Prozentpunkt) zu erkennen. Insbesondere sind bei Φ = 70°, 190° und 310° im Winkelabstand von jeweils 120° lokale Minima im Transmissionsverlauf erkennbar. Bei der Randmessung (Kurve RS) treten diese Transmissionsminima um ein Vielfaches verstärkt auf. Die Modulation der Transmission liegt hier in der Größenordnung von ca. 5 Prozentpunkten. Diese Größenordnung kann für Anwendungen in Hochleistungsoptiken, beispielsweise für Mikrolithografie-Projektionsbelichtungsanlagen, inakzeptabel sein.

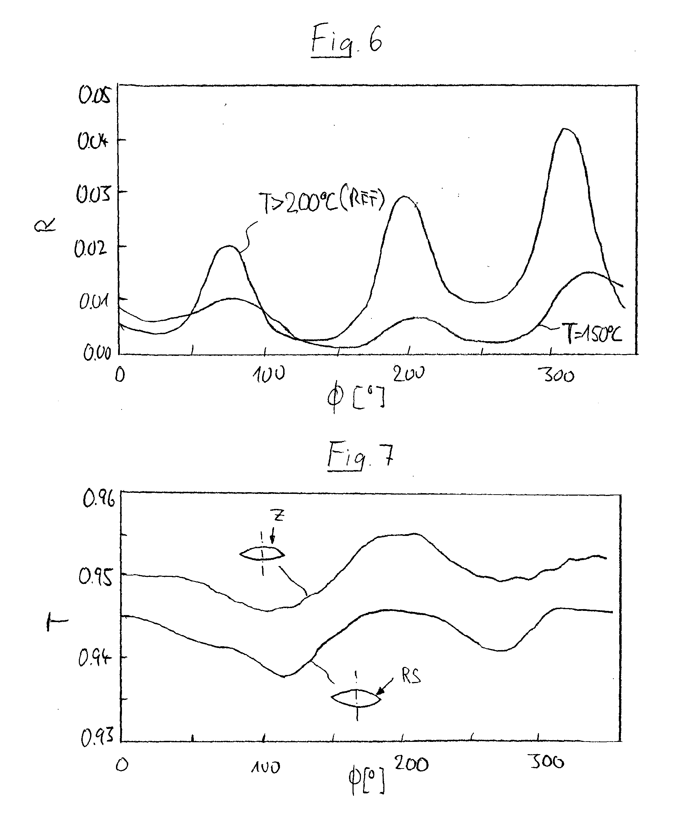

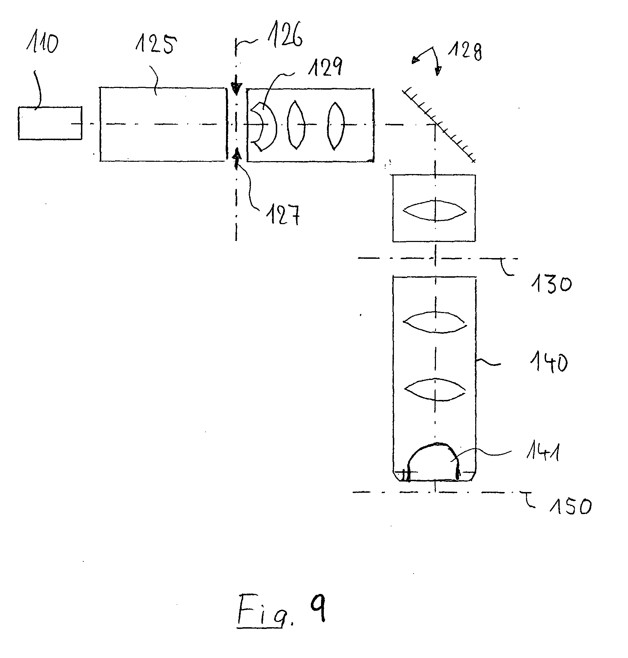

Fig. 4 zeigt die Ergebnisse entsprechender Rundlaufmessungen für den Reflexionsgrad R der Antireflexbeschichtung im Randbereich RS. An den geometrischen Orten mit Transmissionminima treten ausgeprägte Maxima des Reflexionsgrades R auf, wobei dessen Modulation in einer Größenordnung von ca. 3 - 4 Prozentpunkten liegt. Damit wird deutlich, dass ein Großteil der Modulation der Transmission (Fig. 3) durch Reflexionsverluste verursacht wird.

Eine weitere Analyse des Effektes durch Untersuchung der Lage von Reflexionsminima ist in Fig. 5 anhand der Reflexionsspektren an unterschiedlichen Stellen im Randbereich der für Fig. 3 und 4 vermessenen Substratoberfläche gezeigt. Die verschiedenen Messpunkte entlang des Umfangs der Probe (bei Φ = 0°, 130° und 310°) sind in geometrischer Hinsicht äquivalent, weil sie identischen radialen Abstand (gleiche Höhe) in Bezug auf die optische Achse haben. Daher würde man vergleichbare Eigenschaften der Antireflexbeschichtung erwarten. Dabei sind die Messungen bei Φ = 130° und bei Φ = 310° Azimutwinkel an denjenigen Stellen aufgenommen worden, an denen in der Rundlauf-Transmissionsmessung (Fig. 3) das absolute Minimum der Transmission (Φ = 310°) und das absolute Maximum der Transmission (Φ = 130°) auftraten. In Fig. 5 ist erkennbar, dass die Wellenlänge λ, bei der das Minimum des Reflexionsgrades der Antireflexbeschichtung liegt, zwischen ca. 164 nm und ca. 200 nm variiert. Bei der spektralen Breite der Antireflexwirkung der verwendeten, herkömmlichen Zweilagen-Antireflexbeschichtungen können damit enge Spezifikationen für die Reflexion kaum eingehalten werden.

Die sorgfältige Analyse der optischen Eigenschaften herkömmlich hergestellter Linsen hat die Erfinder zu der Hypothese veranlasst, dass die unzulässig starke Anisotropie der optischen Eigenschaften insbesondere am Randbereich stark gekrümmter Substratoberflächen mit der herkömmlich als vorteilhaft angesehenen Heteroepitaxie von Lanthanfluorid auf der Kalziumfluorid-Substratoberfläche zusammenhängen kann. Zur Verifizierung dieser Hypothese wurden aufwendige Untersuchungen durchgeführt, bei denen verschiedene Parameter bei der Beschichtung variiert wurden (Beschichtungstemperatur, Schichttyp, Reinigungsprozess etc.). Die im Folgenden dargestellten Ergebnisse sind mit einem Modell konsistent, das ein heteroepitaktisches Kristallwachstum von LaF₂ auf bestimmten Kristallorientierungen von CaF₂ vorsieht. Da an stark gekrümmten Linsenoberflächen Kristallschnitte mit stark unterschiedlichen Orientierungen vorliegen können, können dadurch Änderungen der optischen Eigenschaften der Schichten hervorgerufen werden. Anhand einiger repräsentativer Messergebnisse werden die gewonnenen Ergebnisse im Folgenden erläutert.

Anhand von Fig. 6 wird zunächst der Einfluss der Beschichtungstemperatur auf die Anisotropie des Reflexionsgrades R erläutert. Dabei zeigt die stark modulierte Kurve (T > 200°C) die in Fig. 4 gezeigte Kurve für die Referenzlinse REF, die mit einem LaF₃/MgF₂-Zweilagensystem beschichtet war. Die schwächer modulierte Kurve (T < 180°C) zeigt die Ergebnisse für ein entsprechendes LaF₃/MgF₂-Zweischichtsystem, das bei einer Beschichtungstemperaturen T < 180°C aufgebracht wurde. Es ist offensichtlich, dass die niedrigere Beschichtungstemperatur zu einer deutlich geringeren Modulation mit einer Modulationshöhe von ca. 1 Prozentpunkt führt. Dies lässt den Schluss zu, dass durch die niedrige Beschichtungstemperatur die Mobilität bzw. Oberflächendiffusion der aufgedampften Partikel offenbar derart vermindert wird, dass eine Reorganisation der Partikel zur Bildung einer epitaktischen ersten Schicht mit Vorzugsrichtung unterbunden oder soweit reduziert wird, dass eine im Wesentlichen ungeordnete, weitgehende texturfreie erste Schicht entsteht. Diese kann je nach Prozessführung teilweise amorph und/oder polykristallin sein, wobei die Kristallite der polykristallinen ersten Schicht im Wesentlichen zufallsorientiert sind, so dass die Ausbildung einer Vorzugsrichtung vermieden wird.

Eine in Fig. 2 schematisch dargestellte Ausführungsform einer Antireflexbeschichtung 50 wurde bei Beschichtungstemperaturen von deutlich weniger als 200°C aufgebracht, wobei die Beschichtungstemperaturen insbesondere im Bereich zwischen ca. 150°C und ca. 190°C liegen können. Es handelt sich um eine für eine Designwellenlänge λ₀ = 157nm ausgelegte Mehrlagen-Antireflexbeschichtung mit drei Schichten (3-Schichter). Die direkt auf die Substratoberfläche 13 aufgebrachte erste Schicht 51 besteht aus Magnesiumfluorid, das mit einer nominalen optischen Schichtdicke von 0,5 λ₀ aufgebracht wird. Um eine vernachlässigbare optische Wirkung dieser optisch möglichst neutralen Pufferschicht zu erhalten, sollte die optische Schichtdicke im Bereich 0,45 < λ₀ < 0,55 liegen. Die darauf liegende zweite Schicht 52 besteht aus Lanthanfluorid, die auf dieser liegende dritte Schicht 53 wieder aus Magnesiumfluorid. Die äußeren beiden Schichten 52, 53 sind Viertelwellenlängenschichten (nominale optische Schichtdicke 0,25 λ₀). An derart beschichteten Linsen wurden Rundlaufmessungen analog zu den bereits beschriebenen Messungen durchgeführt.

Bei derart aufgebauten Ausführungsformen (vgl. Fig. 2) wird als erste Schicht eine niedrigbrechende MgF₂-Schicht verwendet. Es hat sich gezeigt, dass dieses Schichtmaterial auch bei höheren Beschichtungstemperaturen im Wesentlichen ungeordnet aufwächst, so dass sich die Kristallstruktur des Substrates in der ersten Schicht und damit in der Beschichtung nicht fortsetzt. Darüber können Wechselschichtpakete aus LaF₃/MgF₂ aufgebracht werden, wodurch sich insbesondere 3-, 5- oder allgemein 2n + 1 Schichtsysteme ergeben (n = ganze Zahl). Anhand von Fig. 7 wird der Einfluss der Zusammensetzung der substratnächsten ersten Schicht auf die Anisotropie der Transmission im Randbereich einer beidseitig beschichteten Kalziumfluorid-Linse erläutert. Dabei zeigt die untere Kurve (RS) die azimutale Modulation im Randbereich, während die obere Kurve (Z) die Modulation in der Zone zwischen optischer Achse und Randbereich zeigt. Es ist erkennbar, dass die Modulationshöhe sowohl im Zonenbereich als auch im Randbereich bei etwa 0,8 Prozentpunkten liegen. Verglichen mit der entsprechenden Modulation des Zweischichters mit erster Schicht aus Lanthanfluorid (siehe Fig. 3) wird die erhebliche Verbesserung in einer Verringerung der Modulation deutlich. Berücksichtigt man, dass die Randmessungen nicht am äußersten Rand der Probe durchgeführt wurden, so kann von einer maximalen azimutalen Modulation des Transmissionsgrades im Randbereich von weniger als 1,5 Prozentpunkten, insbesondere von weniger als 1 Prozentpunkt ausgegangen werden.

Die annähernd 2-wellige Charakteristik der Modulation bei dieser speziellen Probe wird auf den Umstand zurückgeführt, dass die <111>-Kristallrichtung des Substratmateriales bei dieser Probe nicht mit der optischen Achse der Linse zusammenfällt, sondern gegenüber dieser eine deutliche Verkippung aufweist. Hierdurch verschieben sich auch die Positionen derjenigen Bereiche, an denen niedrig indizierte Netzebenen die Substratoberfläche bilden. Bei einer derartigen Fehlorientierung kann es bei Rundlaufmessungen im Randbereich zu unregelmäßigen Modulationen kommen, beispielsweise zur dargestellten 2-Welligkeit.

Die deutliche Verringerung der Anisotropie der optischen Wirkung durch die Wahl eines nicht aus Lanthanfluorid bestehenden Schichtmaterials für die erste Schicht wird auch bei den in Fig. 8 dargestellten Messungen des spektralen Verlaufes des Reflexionsgrades R der Beschichtung an unterschiedlichen Positionen der Substratoberfläche deutlich. Der spektrale Verlauf des Reflexionsgrades im achsnahen Bereich, d.h. in der Mitte M der Substratoberfläche (Kurve 1) stimmt sehr gut mit dem aus Rechnungen erwarteten Verlauf des verwendeten Drei-Schichters (CaF₂ | MgF₂ 0,5 λ₀ | LaF₃ 0,25 λ₀ | MgF₂ 0,25 λ₀) überein. Im Randbereich ist bei den Messungen bei 85° und bei 315° Azimutwinkel vor allem über die Höhe der Reflexion etwas unterschiedlich. Aus dem Vergleich zu Fig. 5 wird aber deutlich, dass eine signifikante Verschiebung der spektralen Lage des Reflexionsminimums bei dieser Ausführungsform einer erfindungsgemäßen Antireflexbeschichtung nicht auftritt. Damit kann die problematische Anisotropie der Beschichtungseigenschaften vermieden werden.

In Fig. 8 ist als mögliches Anwendungsbeispiel für optische Komponenten gemäß der Erfindung eine Ausführungsform einer Projektionsbelichtungsanlage 100 für die Mikrolithografie schematisch gezeigt. Sie umfasst eine Laser-Lichtquelle 110, deren polarisiertes Ausgangslicht mit Hilfe eines Beleuchtungssystems 120 präpariert und in eine Austrittsebene 130 des Beleuchtungssystems übertragen wird, in der sich eine strukturtragende Transmissionmaske (Retikel) befindet. Das Muster der Maske wird mit Hilfe eines Projektionsobjektivs 140 mit hoher numerischer Apertur in die Bildebene 150 des Projektionsobjektivs übertragen, in der ein mit einer lichtempfindlichen Schicht beschichtetes Substrat (z.B. Halbleiterwafer) angeordnet ist.

Das Beleuchtungssystem umfasst eine Gruppe 125 optischer Einrichtungen, die dazu dienen, in einer Feldebene 126 des Beleuchtungssystems ein homogen beleuchtetes Beleuchtungsfeld mit einer definierten Winkelverteilung der eintretenden Strahlung bereitzustellen, wobei die Winkelverteilung normalerweise an die Art der Struktur des Retikels angepasst werden kann. Nahe der Feldebene 126 sitzt eine verstellbare Feldblende 127 zur randscharfen Begrenzung des Feldes. Ein der Feldebene folgendes Abbildungobjektiv 128 bildet die Feldebene 126 auf das Retikel ab. Am Eintritt des Abbildungsobjektivs 128 ist als erstes Element eine zur Feldebene 126 konkave Meniskuslinsen 129 angeordnet, die eine stark gekrümmte Eintrittsfläche und eine vergleichbar stark gekrümmte Austrittsfläche hat und unter anderem der Einstellung der Telezentrie der Strahlung dient.

Das Projektionsobjektiv 140, das dioptrisch oder katoptrisch aufgebaut sein kann, hat typischerweise eine bildseitige numerische Apertur NA ≥ 0,7. Im Beispielsfall ist als letztes optisches Element vor der Bildebene 150 eine Plankonvexlinse 141 mit ebener Austrittsfläche und stark gekrümmter, sphärischer Eintrittsfläche vorgesehen, die mit hoher Apertur auftreffende Strahlung aberrationsarm zur Bildebene 150 zusammenführt.

Die Meniskuslinse 129 des Abbildungssystems 128 und die Plankonvexlinse 141 des Projektionsobjektivs 140 sind typische Beispiele für Linsen in hochaperturig betriebenen Abbildungssystemen, die nahe an Feldebenen liegen und deren Transmissionseigenschaften im Hinblick sowohl auf Intensitätsfehler als auch auf Wellenfrontfehler möglichst gleichmäßig sein sollten. Bei Arbeitswellenlängen von 157 nm oder darunter bestehen die meisten oder alle transparenten optischen Komponenten aus Kalziumfluorid oder einem anderen geeigneten kristallinen Seltenerd-Fluoridmaterial, beispielsweise Bariumfluorid, da andere ausreichend transparente Materialien nicht verfügbar sind. Auch bei Systemen für 193 nm Arbeitswellenlänge bestehen feldnah angebrachte Linsen häufig aus Kalziumfluorid, um in diesen Bereichen hoher Strahlungsenergiedichte Eigenschaftsveränderungen des optischen Systemes aufgrund von strahlungsinduzierter Dichteänderungen (insbesondere compaction) zu vermeiden. Daher hat die Erfindung besonders im Bereich der Mikrolithografie bei Arbeitswellenlängen aus dem tiefen Ultraviolettbereich (DUV) großen Nutzen.

Die Vorteile der Erfindung wurden hier anhand weniger Ausführungsbeispiele im Detail erläutert. Der Fachmann erkennt, dass die Vorteile der Erfindung bei stark konvex oder bei stark konkav gekrümmten Substratoberflächen genutzt werden können. Obwohl die Problematik anhand von <111>-orientierten Kalziumfluorid-Linsen erläutert wurde, ist der Nutzen der Erfindung nicht auf solche Linsen beschränkt. Analoge Vorteile ergeben sich insbesondere auch bei Fluoridkristalllinsen, deren optischen Achsen im Wesentlichen parallel zu anderen niedrig indizierten Kristallrichtungen des kubischen Systems orientiert sind, also im Wesentlichen parallel zu einer <100>-Richtung oder im Wesentlichen parallel zu einer <110>-Richtung.

Generell kann die hier dargestellte Problematik bei allen gekrümmten Substratoberflächen auf Kristallsubstraten auftreten, bei denen unterschiedliche Netzebenen die Substratoberfläche bilden, wobei nach den hier gezeigten Ergebnissen die möglicherweise entstehende Anisotropie dann besonders ausgeprägt ist, wenn an mindestens einer Stelle einer Substratoberfläche eine niedrig indizierte Kristallrichtung mit der Normalenrichtung der Substratoberfläche zusammenfällt. Daher kann der Effekt auch bei Substratoberflächen auftreten, deren Krümmung schwächer ist als diejenige der hier gezeigten Beispiele.

Die der Erfindung zugrunde liegenden Überlegungen können auch nutzbringend bei der Beschichtung von Linsen mit kleinen Krümmungen und von Planplatten genutzt werden, die zufällig orientiertes, einkristallines Substratmaterial haben. Dabei kann es beispielsweise bei einer Serienfertigung vorkommen, dass die Oberflächen von Linsen oder Planplatten kristallografisch unterschiedlich sind, obwohl die Geometrie der Substrate identisch ist. Insbesondere kann es vorkommen, dass eine oder wenige der optischen Komponenten eine Substratoberfläche haben, die an mindestens einer Stelle parallel zu niedrig indizierten Netzebenen des Kristallmaterials liegt, während dies bei anderen Elementen nicht oder nicht in gleicher Ausprägung der Fall ist. Würden solche Substrate mit einer ersten Schicht aus Lanthanfluorid unter solchen Bedingungen beschichtet, die zu einer Epitaxie zwischen Substrat und erster Schicht führen, so könnten die ersten Schichten, und damit auch die auf diesen basierenden Mehrschichtsystemen, trotz geometrisch identischer Substrate und identischer Beschichtungsbedingungen unterschiedliche optische Eigenschaften haben, da das Anwachsverhalten der ersten Schicht sich von Linse zu Linse oder Platte zu Platte unterscheiden könnte. Daher kann es vorteilhaft sein, in einem Beschichtungsverfahren für Substrate mit zufällig orientiertem Substratmaterial die erste Schicht so herzustellen, dass sie eine im Wesentlichen texturfreie Schichtstruktur hat und damit als Pufferschicht dienen kann, um für die darauf folgenden dielektrischen Schichten unabhängig von der Substratorientierung eine einheitliche Aufwachsoberfläche zu bilden. Dadurch kann die Fertigungsstabilität erhöht werden.

## Patentansprüche

1. Optische Komponente mit:
einem Substrat, an dem mindestens eine gekrümmte Substratoberfläche ausgebildet ist, die eine optische Achse der optischen Komponente definiert,
wobei die Substratoberfläche mit einer im Ultraviolettbereich bei einer Designwellenlänge λ₀ wirksamen Mehrlagenbeschichtung belegt ist, die eine auf der Substratoberfläche aufgebrachte erste Schicht aus einem ersten dielektrischen Material und mindestens eine auf der ersten Schicht aufgebrachte zweite Schicht aus einem zweiten dielektrischen Material umfasst,
wobei das Substrat aus einem Kristallmaterial besteht, das eine parallel zur optischen Achse verlaufende achsparallele Kristallrichtung und senkrecht auf Randbereichen der gekrümmten Substratoberfläche stehende Rand-Kristallrichtungen aufweist,
wobei ein Winkel zwischen der achsparallelen Kristallrichtung und den Rand-Kristallrichtungen mindestens 17° beträgt und die erste Schicht eine im Wesentlichen texturfreie Schichtstruktur hat.

2. Optische Komponente nach Anspruch 1, bei der die achsparallele Kristallrichtung weniger als 15° von einer niedrig indizierten Kristallrichtung des Kristallmaterials abweicht.

3. Optische Komponente nach Anspruch 2, bei der die achsparallele Kristallrichtung weniger als 3° von einer <111>-Richtung oder einer <110>-Richtung oder einer <100>-Richtung des Kristallmaterials abweicht.

4. Optische Komponente nach Anspruch 1, bei der die gekrümmte Substratoberfläche so verläuft, dass an mindestens zwei unterschiedlichen Oberflächenbereichen der Substratoberfläche niedrig indizierte Kristallrichtungen des Kristallmaterials senkrecht zur Substratoberfläche stehen.

5. Optische Komponente nach Anspruch 1, bei der die erste Schicht aus einem niedrigbrechenden dielektrischen Material besteht.

6. Optische Komponente nach Anspruch 5, bei dem die erste Schicht im wesentlichen aus Magnesiumfluorid besteht.

7. Optische Komponente nach Anspruch 1, bei der die erste Schicht mindestens bereichsweise eine amorphe Schichtstruktur hat

8. Optische Komponente nach Anspruch 1, bei der die erste Schicht eine polykristalline Schicht mit einer Vielzahl von Kristalliten mit im Wesentlichen statistischer Verteilung von Kristallorientierungen ist.

9. Optische Komponente nach Anspruch 1, bei der die erste Schicht eine auf der Substratoberfläche aufgebrachte, nicht aus Lanthanfluorid bestehende erste Teilschicht aus einem hochbrechenden dielektrischen Material und eine darauf aufgebrachte zweite Teilschicht hat, die im Wesentlichen aus Lanthanfluorid besteht.

10. Optische Komponente nach Anspruch 9, bei der die erste Teilschicht im Wesentlichen aus Gadoliniumfluorid besteht.

11. Optische Komponente nach Anspruch 1, bei der die erste Schicht aus einem niedrigbrechenden dielektrischen Material und die zweite Schicht im wesentlichen aus Lanthanfluorid besteht.

12. Optische Komponente nach Anspruch 1, die eine Linse mit einem Substrat aus einem für die Strahlung der Designwellenlänge transparenten Kristallmaterial ist, wobei die Mehrlagenbeschichtung als Mehrlagen-Antireflexbeschichtung ausgelegt ist.

13. Optische Komponente nach Anspruch 12, die einen ortsabhängigen Transmissionsgrad hat, der über den Querschnitt der Substratoberfläche eine Variationsbreite von weniger als 1 Prozentpunkt aufweist.

14. Optische Komponente nach Anspruch 12, bei der ein Transmissionsgrad im Randbereich in Umfangsrichtung eine Variationsbreite hat, die weniger als 1 Prozentpunkt beträgt.

15. Optische Komponente nach Anspruch 1, die für eine Designwellenlänge 120 nm < λ₀ < 260 nm ausgelegt ist.

16. Optische Komponente nach Anspruch 1, bei der das Substrat aus einem Fluoridkristallmaterial besteht, das aus der Gruppe mit Kalziumfluorid (CaF₂) und Bariumfluorid (BaF₂) ausgewählt ist.

17. Optische Komponente nach Anspruch 12, bei der die Mehrlagenbeschichtung als erste Schicht eine niedrigbrechende Schicht hat, auf der mindestens ein LaF₃/MgF₂ -Wechselschichtpaket aufgebracht ist.

18. Optische Komponente nach Anspruch 12, bei der als erste Schicht eine polykristalline oder amorphe Schicht aus einem dem Kristallmaterial des Substrates chemisch im Wesentlichen gleichen Schichtmaterial aufgebracht ist.

19. Verfahren zur Herstellung einer optische Komponente mit einem Substrat, an dem mindestens eine gekrümmte Substratoberfläche ausgebildet ist, die eine optische Achse der optischen Komponente definiert und die mit einer im Ultraviolettbereich bei einer Designwellenlänge λ₀ wirksamen Mehrlagenbeschichtung belegt ist, wobei das Substrat aus einem Kristallmaterial besteht, das eine parallel zur optischen Achse verlaufende achsparallele Kristallrichtung und senkrecht auf Randbereichen der gekrümmten Substratoberfläche stehende Rand-Kristallrichtungen aufweist, wobei ein Winkel zwischen der achsparallelen Kristallrichtung und den Rand-Kristallrichtungen mindestens 17° beträgt, mit folgenden Schritten: Beschichten der Substratoberfläche mit einer ersten Schicht aus einem ersten dielektrischen Material; und Beschichten der ersten Schicht mit mindestens einer auf der ersten Schicht aufgebrachten zweiten Schicht aus einem zweiten dielektrischen Material umfasst, wobei die erste Schicht so aufgebracht wird, dass die erste Schicht eine im Wesentlichen texturfreie Schichtstruktur hat.

20. Verfahren nach Anspruch 19, bei dem die Beschichtung so gesteuert wird, dass die erste Schicht mindestens bereichsweise amorph aufwächst.

21. Verfahren nach Anspruch 19, bei dem die Beschichtung so gesteuert wird, dass die erste Schicht mindestens bereichsweise eine polykristalline Schicht mit einer Vielzahl von Kristalliten mit im Wesentlichen statistischer Verteilung von Kristallorientierungen ist.

22. Verfahren nach Anspruch 19, bei dem die Erzeugung der ersten Schicht bei einer Beschichtungstemperatur von 180°C oder darunter durchgeführt wird.

23. Optisches Abbildungssystem zur Abbildung einer ersten Feldfläche in eine optisch konjugierte zweite Feldfläche mit mehreren optischen Komponenten, wobei mindestens eine der optischen Komponenten gemäß Anspruch 1 aufgebaut ist.

24. Abbildungssystem nach Anspruch 23, bei dem die optische Komponente mit der beschichteten, gekrümmten Substratoberfläche in der Nähe einer Feldfläche dort angeordnet ist, wo die Randstrahlhöhe der Abbildung klein gegen die Hauptstrahlhöhe ist.

25. Abbildungssystem nach Anspruch 23, bei dem die optische Komponente mit der beschichteten, gekrümmten Substratoberfläche so angeordnet ist, dass an der Substratoberfläche Inzidenzwinkel der einfallenden Strahlung auftreten, die Inzidenzwinkel von mehr als 30° einschließen.

26. Optische Komponente mit:
einem Substrat, an dem mindestens eine gekrümmte Substratoberfläche ausgebildet ist, die eine optische Achse der optischen Komponente definiert,
wobei die Substratoberfläche mit einer im Ultraviolettbereich bei einer Designwellenlänge λ₀ mit 120 nm < λ₀ < 260 nm wirksamen Mehrlagenbeschichtung belegt ist, die eine auf der Substratoberfläche aufgebrachte erste Schicht aus einem ersten dielektrischen Material und mindestens eine auf der ersten Schicht aufgebrachte zweite Schicht aus einem zweiten dielektrischen Material umfasst,
wobei:
das Substrat aus einem für die Strahlung der Designwellenlänge transparenten Kristallmaterial besteht, das eine parallel zur optischen Achse verlaufende achsparallele Kristallrichtung und senkrecht auf Randbereichen der gekrümmten Substratoberfläche stehende Rand-Kristallrichtungen aufweist;
die Mehrlagenbeschichtung als Mehrlagen-Antireflexbeschichtung ausgelegt ist;
die erste Schicht eine optisch im wesentlichen neutrale niedrigbrechende Schicht mit einer optische Schichtdicke zwischen 0,45λ₀ und 0,55λ₀ ist und eine im Wesentlichen texturfreie Schichtstruktur hat;
die zweite Schicht im Wesentlichen aus Lanthanfluorid (LaF₃) besteht; und
eine dritte Schicht im Wesentlichen aus Magnesiumfluorid (MgF₂) besteht.

27. Optische Komponente nach Anspruch 26, bei der auf der ersten Schicht genau ein LaF₃/MgF₂ -Wechselschichtpaket aufgebracht ist.

28. Optische Komponente nach Anspruch 26, bei der ein Winkel zwischen der achsparallelen Kristallrichtung und den Rand-Kristallrichtungen mindestens 17° beträgt.
